# FASCICULE DE BREVET EUROPEEN

(11) **EP 2 548 693 B1**
(45) Date de publication et mention de la délivrance du brevet: **15.01.2014**
(21) Numéro de dépôt: 12176833.7
(22) Date de dépôt: 18.07.2012
(51) Int. Cl.: B23K 26/12, B23K 26/14, B23K 26/20, B23K 26/34, G21C 19/02

(54) **Système pour créer une zone de fusion avec apport de matière dans un liquide ambiant**
System zur Schaffung einer Schmelzzone mit Materialzuführung in einer Umgebungsflüssigkeit
System for creating a melting zone with addition of material in an ambient liquid

(30) Priorité: 20.07.2011 FR 1156581
(43) Date de publication de la demande: 23.01.2013
(73) Titulaire: COMMISSARIAT A L'ENERGIE ATOMIQUE ET AUX ENERGIES ALTERNATIVES, 75015 Paris (FR)
(72) Inventeur: Chagnot, Christophe, 78140 Velizy-Villacoublay (FR); Canneau, Gaetan, 75017 Paris (FR)
(74) Mandataire: Regimbeau

(56) Documents cités:
- JP-A- 9 010 979
- JP-A- 2000 280 087
- US-A1- 2010 200 554
- US-B1- 6 555 779

## Description

La présente invention concerne un système comportant une tête adaptée pour créer une zone de fusion sur une surface d'une pièce à souder ou à charger en matière, la pièce et la tête étant placées, en fonctionnement, dans un liquide ambiant, la tête comportant une buse adaptée pour projeter un liquide sur la surface pour former un rideau protecteur contre le liquide ambiant autour de la zone de fusion, le système comportant en outre une amenée de matière vers la zone de fusion (voir, par exemple, US 6 555 779).

### ETAT DE L'ART

On connaît des systèmes de soudure ou de rechargement en matière d'une pièce dans un liquide ambiant.

Selon un exemple connu de réalisation, le système comporte une tête adaptée pour créer une zone de fusion sur une surface de la pièce à souder ou à charger en matière.

La tête comporte une buse adaptée pour projeter un liquide sur la surface, pour former un rideau protecteur contre le liquide ambiant autour de la zone de fusion. Le rideau est périphérique à la tête et à la zone de fusion, et a en général une forme de cône de liquide.

La tête comporte également une arrivée de gaz interne au rideau, pour créer une zone sèche interne au rideau et permettre la création de la zone de fusion.

Le système comporte en outre une amenée de matière vers la zone de fusion. Cette amenée s'effectue dans la zone interne au rideau, en général sous forme d'un fil d'apport.

Le système connu présente ainsi des inconvénients.

Les contraintes d'encombrement et les limitations de rayon de courbure du fil d'apport imposent un angle d'amenée du fil de matière supérieur à 30° par rapport à la surface de la pièce à souder ou à charger en matière.

Cet angle trop important engendre des défauts dans la soudure ou le rechargement de matière.

### PRESENTATION DE L'INVENTION

L'invention propose de pallier au moins un de ces inconvénients.

A cet effet, on propose selon l'invention un système comportant
- une tête adaptée pour créer une zone de fusion sur une surface d'une pièce à souder ou à charger en matière, la pièce et la tête étant placées, en fonctionnement, dans un liquide ambiant,
   la tête comportant une buse adaptée pour projeter un liquide sur la surface pour former un rideau protecteur contre le liquide ambiant autour de la zone de fusion, et
- une amenée de matière vers la zone de fusion,
   où l'amenée comporte un sabot adapté pour traverser le rideau protecteur et pour être en contact avec la surface, et à travers lequel la matière est amenée vers la zone de fusion.

L'invention est avantageusement complétée par les caractéristiques suivantes, prises seules ou en une quelconque de leur combinaison techniquement possible :
- le sabot comporte :
   - un bord d'attaque adapté pour intersecter le rideau protecteur,
   - deux bords de fuite adaptés pour être en contact avec la surface, et
   - des flancs reliant le bord d'attaque à chacun des bords de fuite,
   les flancs du sabot s'évasant du bord d'attaque en direction de la surface, de sorte que les flancs soient toujours en contact avec le rideau, en fonctionnement ;
- les flancs du sabot s'évasent de sorte que, en fonctionnement, dans un plan du rideau protecteur, la relation suivante soit toujours vérifiée :
   α ≥ β
   où α est un angle au sommet entre les flancs du sabot, et
   β est un angle au sommet entre des génératrices du rideau protecteur au niveau de l'intersection du bord d'attaque avec le rideau ;
- le système comporte un plaqueur du sabot sur la surface ;
- un axe de plaquage du plaqueur est parallèle à un axe longitudinal de la tête ;
- le sabot est monté à translation selon un axe parallèle à la surface de la pièce ;
- la tête est montée à translation selon un axe perpendiculaire à la surface ;
- le système comporte une pluralité de sabots ayant chacun un angle d'amenée de matière différent de celui d'un autre sabot ;
- le système comporte au moins un sabot ayant un angle d'amenée de matière compris entre 10° et 20° ; et
- la tête est une tête laser.

L'invention présente de nombreux avantages.

Elle permet d'effectuer une amenée de matière vers la zone de fusion à travers le rideau protecteur, tout en gardant un cloisonnement étanche de la zone interne au rideau.

L'invention permet d'obtenir plusieurs valeurs d'angle d'amenée de la matière, mais grâce à l'amenée de matière vers la zone de fusion à travers le rideau protecteur, l'angle d'amenée du fil de matière peut être inférieur à 30°, ce qui permet d'éviter les défauts dans la soudure ou le rechargement de matière.

La forme du sabot permet également prendre en compte la variation de hauteurs entre la tête et la surface de la pièce à souder ou à charger en matière.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente une vue en perspective d'un système selon l'invention ;
- la figure 2A représente une vue en perspective d'un mode de réalisation possible d'un sabot selon l'invention ;
- la figure 2B représente une vue en coupe longitudinale d'un mode de réalisation possible d'un sabot selon l'invention ;
- la figure 2C représente une vue de face d'un mode de réalisation possible d'un sabot selon l'invention ;
- les figures 3A et 3B représentent un système selon l'invention en fonctionnement, avec une tête positionnée à une distance d'une surface d'une pièce à souder ou à recharger, respectivement à une première distance et à une deuxième distance ;
- la figure 4 représente schématiquement une vue en coupe longitudinale d'un système selon l'invention, en fonctionnement ;
- la figure 5 représente schématiquement une intersection entre le sabot selon l'invention et un rideau protecteur formé par une tête du système selon l'invention.

Sur l'ensemble des figures, les éléments similaires portent des références numériques identiques.

### DESCRIPTION DETAILLEE

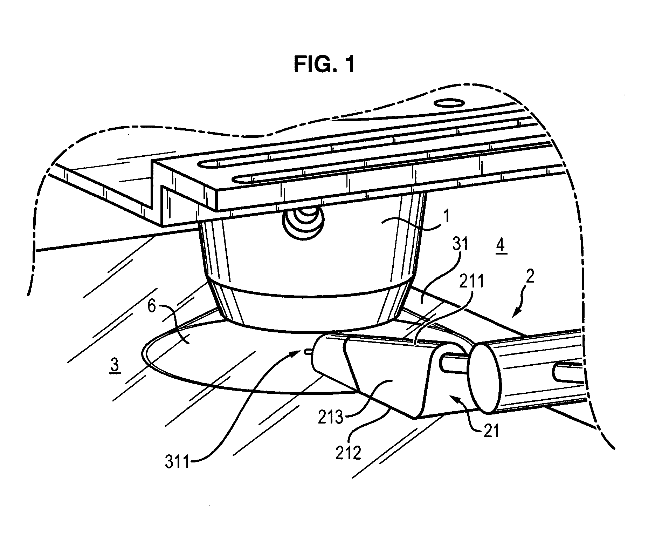

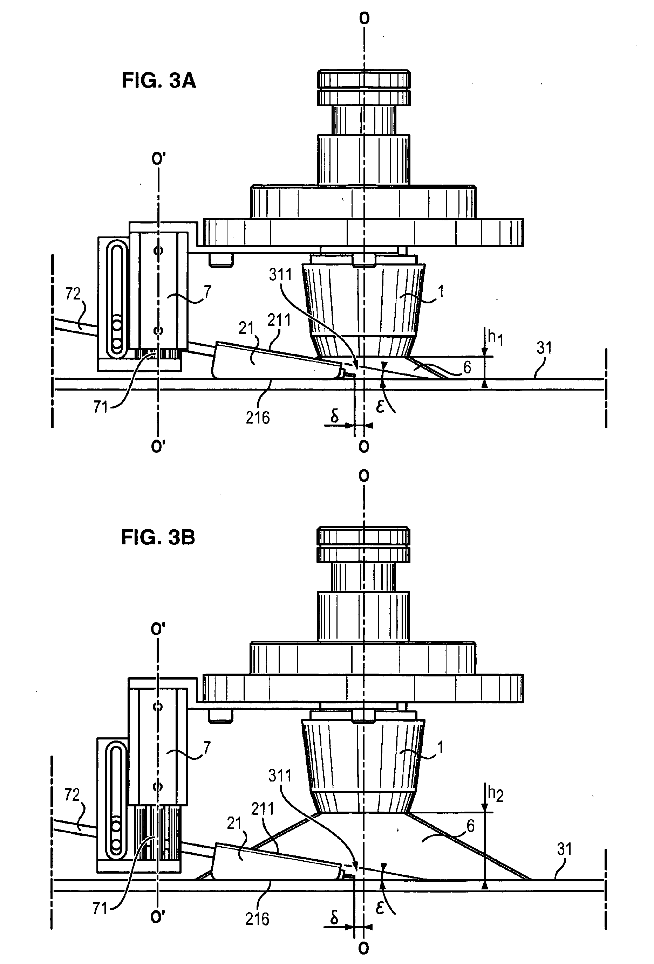

Les figures 1, 3A et 3B montrent qu'un système selon l'invention comporte principalement
- une tête 1 adaptée pour créer une zone 311 de fusion sur une surface 31 d'une pièce 3 à souder ou à charger en matière, et
- une amenée 2 de matière 5 vers la zone 311 de fusion.

La tête 1 est adaptée pour créer la zone 311 de fusion par un procédé thermique quelconque connu de l'homme du métier, comme par exemple
- un procédé thermique de soudage à l'arc, par exemple avec une électrode non fusible, comme par exemple un procédé TIG (Tungsten Inert Gas) selon la terminologie anglaise généralement utilisée par l'homme du métier ;
- un procédé thermique de chauffage par plasma,
- un procédé thermique de chauffage par chalumeau à flamme, ou
- préférentiellement un procédé thermique de chauffage par faisceau laser.

Bien entendu, la pièce 3 à souder ou à charger en matière est en métal, de même que la matière 5. Dans le domaine nucléaire, le métal peut être :
- un acier inoxydable de nuance « 304L » ou « 316L », soudé avec un fil d'apport de nuance « 309 », « 308 » ou « 316 », ou
- un alliage de nickel et de chrome de nuance « inconel 600 » ou « inconel 690 », soudé avec un fil d'apport de nuance « inconel 82 » ou « inconel 52 ».

La pièce 3 et la tête 1 sont placées, en fonctionnement et dans les applications visées (par exemple la réparation des protections (encore appelées « peaux ») en acier inoxydable des piscines de stockage ou de composants internes des réacteurs nucléaires), dans un liquide ambiant 4, typiquement de l'eau.

On comprend par conséquent qu'il faille prévoir une zone sèche pour permettre la création de la zone 311 de fusion.

A cet effet, la tête 1 comporte une buse 11 adaptée pour projeter un liquide, préférentiellement de l'eau sous pression pour les applications sous eau, sur la surface 31 pour former un rideau 6 protecteur contre le liquide 4 ambiant autour de la zone 311 de fusion.

Le rideau 6 assure un cloisonnement étanche entre une zone sèche, interne au rideau 6, et le liquide 4 ambiant. Le cloisonnement étanche s'effectue sans contact mécanique entre la tête 1 et la surface 31.

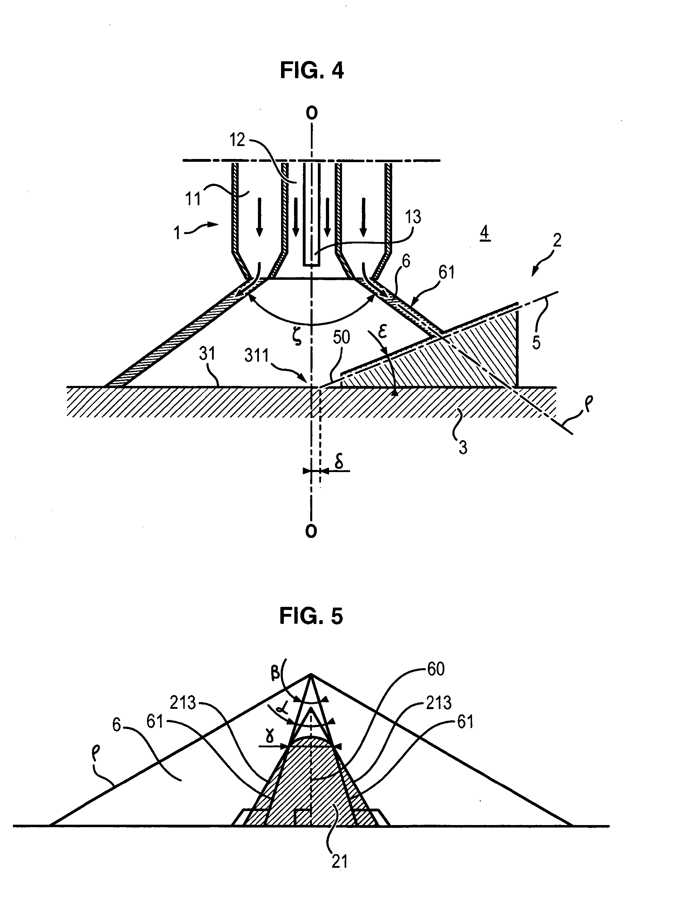

Comme on le voit sur la figure 4, le rideau 6, formé du liquide sous pression projeté par la buse 11, est périphérique à la tête 1 et à la zone de fusion 311, et a préférentiellement une forme de cône s'évasant de la tête 1 vers la surface 31.

On référence par ζ (zêta) l'angle au sommet du cône du rideau 6. Plusieurs valeurs de ζ sont possibles en fonction de l'inclinaison de la buse 11, mais l'angle ζ est typiquement de l'ordre de 120°.

Une épaisseur du rideau 6 est typiquement comprise entre 0,5mm et 2mm.

Un débit de liquide hors de la buse 11 est typiquement compris entre 30litres/min et 200litres/mn.

Afin de créer la zone sèche interne au rideau 6, et permettre la création de la zone 311 de fusion, la tête 1 comporte également une arrivée 12 de gaz, périphérique à un axe (OO) longitudinal de la tête 1.

Afin d'obtenir un angle ε d'amenée de la matière 5 strictement inférieur à 30° pour assurer une soudure ou une recharge de matière optimales, l'amenée 2 comporte un sabot 21 adapté pour traverser le rideau 6 protecteur.

Et la matière 5 est amenée vers la zone 311 de fusion à travers le sabot 21.

De manière classique, l'amenée de matière 5 s'effectue sous la forme d'un fil 50 d'apport, l'angle ε étant alors compté comme l'angle entre le fil 50 et la surface 31. Le fil 50 d'apport a typiquement un diamètre compris entre 0,78 et 1,6 mm.

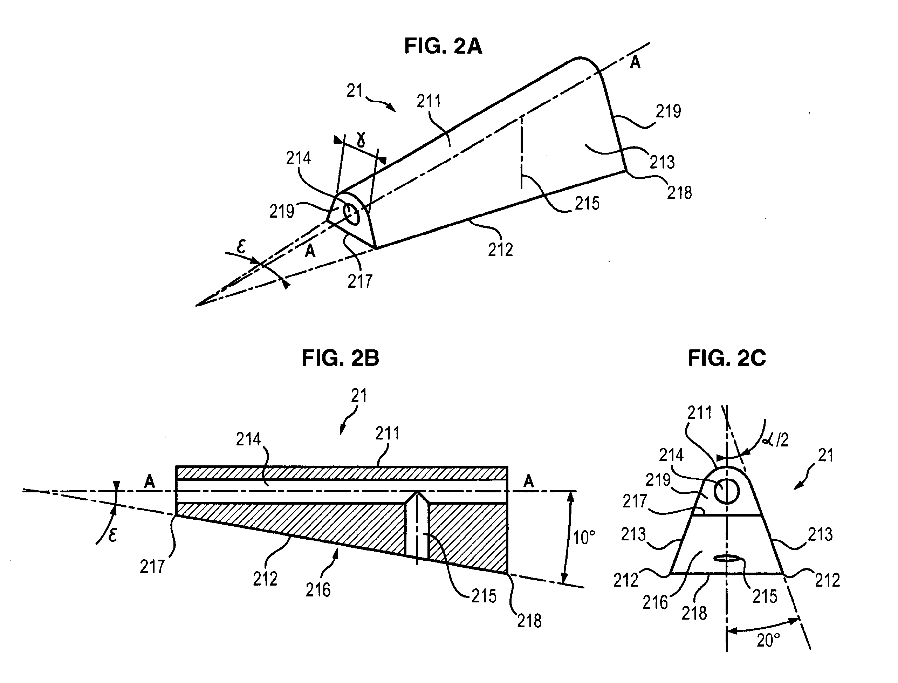

L'angle ε est strictement inférieur à 30°, préférentiellement strictement compris entre 1 ° et 30°, avantageusement compris entre 15° et 25° et très avantageusement compris entre 10° et 20°. On constate ainsi que dans l'exemple de la figure 2B, l'angle ε a une valeur de 10°.

Afin de pouvoir effectuer le guidage du fil 50 de matière 5 à travers le sabot 21, les figures 2A, 2B et 2C montrent que le sabot 21 comporte un canal 214 traversant de part en part le sabot 21 selon un axe A-A longitudinal du sabot 21. Le diamètre du canal est par exemple de 4mm

Le canal 214 reçoit un tube 72, couramment dénommé guide-fil, entourant le fil 50 d'apport.

Le tube 72 est couramment terminé par une restriction, conique en général, non représentée sur les figures, dont le diamètre, adapté au diamètre du fil 50 (avec un jeu de l'ordre du 1/10mm), permet un bon positionnement du fil 50.

On voit également sur ces figures que le sabot 21 comporte
- une face inférieure 216, de profil complémentaire à la surface 31, c'est-à-dire préférentiellement plane,
- deux flancs latéraux 213,
- deux faces extrémales 219, intersectant l'axe A-A, et séparés d'une distance de 55mm par exemple, et
- un sommet 211, culminant à une hauteur d'environ 20mm.

La zone sèche interne au rideau 6 doit avoir un taux d'humidité suffisamment faible pour éviter l'introduction d'hydrogène dans la zone 311 de fusion, ce qui pourrait baisser la qualité de la soudure ou du rechargement. Le fait que le sabot 21 traverse le rideau 6 ne doit donc pas engendrer d'introduction de liquide ambiant 4 dans la zone interne au rideau 6.

A cet effet, en fonctionnement, le sabot 21 est en contact avec la surface 31, via la face inférieure 216. Le sabot 21 permet ainsi de maintenir le cloisonnement étanche entre la zone sèche interne au rideau 6 et le fluide ambiant 4, malgré le fait que le sabot 21 traverse le rideau 6. Il n'y a en effet pas de passage de liquide ambiant 4 entre la face inférieure 216 et la surface 31, grâce au contact entre ces dernières.

De plus, le sabot 21 a une forme de secteur angulaire. A cet effet, la face inférieure 216 est trapézoïdale, et comporte
- deux côtés parallèles, à savoir une grande base 218, et une petite base 217, au niveau des deux faces extrémales 219, et
- deux côtés non parallèles et correspondant chacun à un bord 212 de fuite, au niveau des deux flancs 213. Les deux bords 212 de fuite forment un angle η (êta) entre eux, et sont adaptés pour être en contact avec la surface 31. η est par exemple de l'ordre de 40°.

Avantageusement également, les flancs 213 sont toujours en contact avec le rideau 6, afin d'éviter l'introduction de liquide ambiant 4 dans la zone interne au rideau 6.

A cet effet, le sommet 211 du sabot 21 forme un bord d'attaque 211, adapté pour intersecter le rideau 6 protecteur. Le bord d'attaque 211 peut avoir une forme quelconque mais est très avantageusement de forme arrondie, convexe vers la tête 1. Le bord 211 a une largeur γ (gamma).

Comme le montrent les figures 4 et 5, la buse 11 forme le rideau 6 protecteur grâce à des génératrices 61 formant le cône précité.

Les génératrices 61 du rideau 6 suivent des directions de jets de la buse 11 et sont perpendiculaires à la surface 31. On comprend donc que deux génératrices 61 forment un angle β entre elles dans un plan courbe Pdu rideau 6 du rideau protecteur.

Comme le montrent les figures 2C et 5, les flancs 213 du sabot 21, reliant le bord 211 d'attaque à chacun des bords 212 de fuite, s'évasent de sorte que, en fonctionnement, dans le plan P précité, la relation suivante soit toujours vérifiée :
α ≥ β
où α est un angle au sommet entre les flancs 213 du sabot 21 et β est un angle au sommet entre des génératrices 61 du rideau 6 protecteur, au niveau de l'intersection du bord 211 d'attaque avec le rideau 6.

Pour les applications et le système visés, α est de l'ordre de 40°.

La largeur γ est également inférieure à la longueur de la petite base 217, et bien entendu de la grande base 218.

De cette façon, les jets de liquide de la buse 11 sont toujours en contact avec les flancs 213 et aucune introduction de liquide ambiant 4 n'est possible dans la zone interne.

Les figures 3A et 3B montrent que, de manière préférentielle, la tête 1 est montée à translation selon un axe perpendiculaire à la surface 31, parallèlement à l'axe longitudinal (OO), afin de pouvoir positionner la tête 1 à différentes hauteurs par rapport à la surface 31. On constate ainsi sur la figure 3A que la tête est positionnée à une hauteur h1 de la surface 31, et sur la figure 3B que la tête 1 est positionnée à une hauteur h2 de la surface 31, avec
h2>h1.

Le sommet 211 du sabot est préférentiellement incliné par rapport à la face 216, afin de pouvoir être positionné au moins partiellement sous la tête 1 pour des valeurs faibles de la hauteur de la tête 1 par rapport à la surface 31. Ainsi, même dans le cas d'une hauteur h1 faible, comme c'est le cas sur la figure 3A, le sabot 21 peut être positionné au moins partiellement sous la tête 1.

Ceci a pour avantage de permettre d'amener la matière 5 à une distance δ de l'axe (OO) optimale pour la soudure ou le rechargement.

Préférentiellement, l'inclinaison du sommet 211 est égale à l'angle ε d'amenée de la matière 5 vers la zone 311 de fusion, mais d'autres angles sont également possibles pour l'inclinaison du sommet.

Afin de permettre le réglage de la distance δ, le sabot 21 est monté à translation selon un axe parallèle à la surface 31.

A cet effet, le sabot 21 peut coulisser, grâce au canal 214, sur le tube 72 guide fil. Une fois que la distance δ est optimale, la position du sabot 21 sur le tube 72 est fixée, par exemple par une vis non représentée sur les figures mais venant s'insérer dans un taraudage 215 pratiqué dans la face inférieure 216.

Comme le montrent les figures 3A et 3B, le système comporte un plaqueur 7 du sabot 21 sur la surface 31.

De manière avantageuse, le plaqueur 7 comporte un vérin, comportant un doigt 71 antirotation, relié au tube 72.

Le vérin est par exemple hydraulique ou pneumatique.

Afin d'assurer un contact optimal de la face 216 sur la surface 31, un axe (O'O') de plaquage du plaqueur 7 est parallèle à l'axe (OO) longitudinal de la tête 1.

Comme le montrent les figures 3A et 3B, la distance δ peut ainsi rester constante pour toutes les hauteurs de la tête 1 par rapport à la surface 31.

On souhaite pouvoir effectuer l'amenée de matière selon plusieurs angles. On peut ainsi prévoir une pluralité de sabots 21 ayant chacun un angle ε d'amenée de matière différent de celui d'un autre sabot.

## Revendications

1. Système comportant
- une tête (1) adaptée pour créer une zone (311) de fusion sur une surface (31) d'une pièce (3) à souder ou à charger en matière, la pièce (3) et la tête (1) étant placées, en fonctionnement, dans un liquide (4) ambiant,
la tête (1) comportant une buse (11) adaptée pour projeter un liquide sur la surface (31) pour former un rideau (6) protecteur contre le liquide (4) ambiant autour de la zone (311) de fusion, et
- une amenée (2) de matière (5) vers la zone (311) de fusion,
**caractérisé en ce que**
l'amenée (2) comporte un sabot (21) adapté pour traverser le rideau (6) protecteur et pour être en contact avec la surface (31), et à travers lequel la matière (5) est amenée vers la zone (311) de fusion.

2. Système selon la revendication 1, dans lequel le sabot (21) comporte :
- un bord d'attaque (211) adapté pour intersecter le rideau (6) protecteur,
- deux bords de fuite (212) adaptés pour être en contact avec la surface **(31),** et
- des flancs (213) reliant le bord (211) d'attaque à chacun des bords (212) de fuite,
les flancs (213) du sabot (21) s'évasant du bord (211) d'attaque en direction de la surface, de sorte que les flancs (213) soient toujours en contact avec le rideau (6), en fonctionnement.

3. Système selon la revendication 2, dans lequel les flancs (213) du sabot (21) s'évasent de sorte que, en fonctionnement, dans un plan (P) du rideau (6) protecteur, la relation suivante soit toujours vérifiée :
α≥β
où α est un angle au sommet entre les flancs (213) du sabot (21), et
β est un angle au sommet entre des génératrices (61) du rideau (6) protecteur au niveau de l'intersection du bord (211) d'attaque avec le rideau (6).

4. Système selon l'une des revendications 1 à 3, comportant un plaqueur (7) du sabot (21) sur la surface (31).

5. Système selon la revendication 4, dans lequel un axe (O'O') de plaquage du plaqueur (7) est parallèle à un axe (OO) longitudinal de la tête (1).

6. Système selon l'une des revendications 1 à 5, dans lequel le sabot (21) est monté à translation selon un axe parallèle à la surface (31) de la pièce (3).

7. Système selon l'une des revendications 1 à 6, dans lequel la tête (1) est montée à translation selon un axe perpendiculaire à la surface (31).

8. Système selon l'une des revendications 1 à 7, comportant une pluralité de sabots (21) ayant chacun un angle (ε) d'amenée de matière (5) différent de celui d'un autre sabot (21).

9. Système selon l'une des revendications 1 à 8, comportant au moins un sabot (21) ayant un angle (ε) d'amenée de matière (5) compris entre 10° et 20°.

10. Système selon l'une des revendications 1 à 9, dans lequel la tête est une tête (1) laser.

## Patentansprüche

1. System, umfassend
- einen Kopf (1), der angepasst ist, um eine Schmelzzone (311) auf einer Oberfläche (31) eines Teils (3), das verschweißt werden soll oder dem Material zugeführt werden soll, zu erzeugen, wobei das Teil (3) und der Kopf (1) im Betrieb in einer Umgebungsflüssigkeit (4) platziert sind,
wobei der Kopf (1) eine Düse (11) aufweist, die angepasst ist, um eine Flüssigkeit auf die Oberfläche (31) zu sprühen, um einen Vorhang (6) zum Schutz vor der Umgebungsflüssigkeit (4) um die Schmelzzone (311) herum zu bilden, und
- eine Zuleitung (2) von Material (5) zu der Schmelzzone (311) hin, **dadurch gekennzeichnet, dass**
die Zuleitung (2) einen Schuh (21) aufweist, der angepasst ist, um den Schutzvorhang (6) zu durchqueren und um mit der Oberfläche (31) in Kontakt zu sein, und durch den hindurch das Material (5) zu der Schmelzzone (311) hin geleitet wird.

2. System nach Anspruch 1, wobei der Schuh (21) Folgendes aufweist:
- eine Vorderkante (211), die angepasst ist, um den Schutzvorhang (6) zu schneiden,
- zwei Hinterkanten (212), die angepasst sind, um mit der Oberfläche (31) in Kontakt zu sein, und
- Flanken (213), welche die Vorderkante (211) mit jeder der Hinterkanten (212) verbinden,
wobei sich die Flanken (213) des Schuhs (21) von der Vorderkante (211) in Richtung der Oberfläche aufweiten, so dass die Flanken (213) im Betrieb mit dem Vorhang (6) immer in Kontakt sind.

3. System nach Anspruch 2, wobei sich die Flanken (213) des Schuhs (21) derart aufweiten, dass im Betrieb in einer Ebene (P) des Schutzvorhangs (6) immer die folgende Beziehung verifiziert ist:
α ≥ β
wobei α ein Winkel an der Spitze zwischen den Flanken (213) des Schuhs (21) ist und β ein Winkel an der Spitze zwischen den Mantellinien (61) des Schutzvorhangs (6) im Bereich der Überschneidung der Vorderkante (211) mit dem Vorhang (6) ist.

4. System nach einem der Ansprüche 1 bis 3, das ein Anpress organ (7) des Schuhs (21) gegen die Oberfläche (31) aufweist.

5. System nach Anspruch 4, wobei eine Anpressachse (O'O') des Anpressorgans (7) zu einer Längsachse (OO) des Kopfs (1) parallel ist.

6. System nach einem der Ansprüche 1 bis 5, wobei der Schuh (21) längs einer Achse verschiebbar gelagert ist, die zu der Oberfläche (31) des Teils (3) parallel ist.

7. System nach einem der Ansprüche 1 bis 6, wobei der Kopf (1) längs einer Achse verschiebbar gelagert ist, die zu der Oberfläche (31) senkrecht ist.

8. System nach einem der Ansprüche 1 bis 7, das eine Vielzahl von Schuhen (21) aufweist, die jeder einen Winkel (ε) für die Zuleitung von Material (5) haben, der von jenem eines anderen Schuhs (21) verschieden ist.

9. System nach einem der Ansprüche 1 bis 8, das mindestens einen Schuh (21) aufweist, der einen Winkel (ε) für die Zuleitung von Material (5) hat, der zwischen 10° und 20° beträgt.

10. System nach einem der Ansprüche 1 bis 9, wobei der Kopf ein Laserkopf (1) ist.

## Claims

1. System comprising
- a head (1) adapted to create a melting zone (311) on a surface (31) of a workpiece (3) to be welded or to be charged with material, the workpiece (3) and the head (1) being placed, in operation, in an ambient liquid (4), the head (1) comprising a nozzle (11) adapted to project a liquid onto the surface (31) to form a protective curtain (6) against the ambient liquid (4) surrounding the melting zone (311), and
- an inlet (2) of material (5) to the melting zone (311),
**characterised in that** the inlet (2) comprises a shoe (21) adapted to pass through the protective curtain (6) and to be in contact with the surface (31), and through which the material (5) is fed towards the melting zone (311).

2. System according to claim 1, wherein the shoe (21) comprises:
- a leading edge (211) adapted to intersect the protective curtain (6),
- two trailing edges (212) adapted to be in contact with the surface (31), and
- sidewalls (213) connecting the leading edge (211) to each of the trailing edges (212),
the sidewalls (213) of the shoe (21) tapering from the leading edge (211) towards the surface, so that the sidewalls (213) are always in contact with the curtain (6), in operation.

3. System according to claim 2, wherein the sidewalls (213) of the shoe (21) taper so that, in operation, in a plane (P) of the protective curtain (6), the following relationship is always satisfied:
α ≥ β
where α is an apex angle between the sidewalls (213) of the shoe (21), and
ß is an apex angle between the generatrices (61) of the protective curtain (6) at the intersection of the leading edge (211) with the curtain (6).

4. System according to one of claims 1 to 3, comprising a tackler (7) of the shoe (21) on the surface (31).

5. System according to claim 4, wherein an axis (O'O') of plating of the tackler (7) is parallel to a longitudinal axis (00) of the head (1).

6. System according to one of claims 1 to 5, wherein the shoe (21) is translationally mounted according to an axis that is parallel to the surface (31) of the workpiece (3).

7. System according to one of claims 1 to 6, wherein the head (1) is translationally mounted according to an axis that is perpendicular to the surface (31).

8. System according to one of claims 1 to 7, comprising a plurality of shoes (21) each having an angle (ε) of feeding material (5) different to that of another shoe (21).

9. System according to one of claims 1 to 8, comprising at least one shoe (21) having an angle (ε) of feeding material (5) comprised between 10° and 20°.

10. System according to one of claims 1 to 9, wherein the head is a laser head (1).
